# EUROPEAN PATENT SPECIFICATION

(11) **EP 3 765 404 B1**
(45) Date of publication and mention of the grant of the patent: **05.03.2025**
(21) Application number: 19767777.6
(22) Date of filing: 12.03.2019
(51) Int. Cl.: C01B 3/38, C10G 2/00, B01J 23/46, C10K 3/02, C01B 3/16

(54) **METHOD FOR PRODUCING CARBON MONOXIDE**
VERFAHREN ZUR HERSTELLUNG VON KOHLENMONOXID
MÉTHODE DE PRODUCTION DE MONOXYDE DE CARBONE

(30) Priority: 13.03.2018 FI 20185232
(43) Date of publication of application: 20.01.2021
(73) Proprietor: Teknologian tutkimuskeskus VTT Oy, 02150 Espoo (FI)
(72) Inventor: KAISALO, Noora, 02150 Espoo (FI); SIMELL, Pekka, 02150 Espoo (FI); FRILUND, Christian, 02150 Espoo (FI); VIDAL VAZQUEZ, Francisco, 02150 Espoo (FI); HANNULA, Ilkka, 02150 Espoo (FI)
(74) Representative: Papula Oy
(86) International application number: PCT/FI2019/050204
(87) International publication number: WO 2019/175476

(56) References cited:
- EP-A1- 0 645 344
- EP-A1- 2 660 194
- EP-A2- 1 433 746
- WO-A1-2007/114250
- WO-A1-2015/061915
- US-A- 5 500 449
- US-A1- 2006 029 539
- US-A1- 2011 240 924
- US-B1- 6 254 807
- US-B1- 6 492 290

## Description

### FIELD

The application relates to a method defined in claim 1 for producing carbon monoxide. Further, the application relates to a use of the method defined in claim 9.

### BACKGROUND

Known from the prior art is to produce hydrocarbons by a Fischer-Tropsch synthesis. The Fischer-Tropsch synthesis requires a mixture of H₂ and CO as feed.

Further, it is known from the prior art that carbon dioxide may be converted to carbon monoxide by RWGS (reverse water gas shift) reaction.

US2011/240924 discloses a method of operating a multi-stage ion transport membrane oxidation system. US 5500449 discloses a process for producing a wax in the Fischer-Tropsch reaction. US 6492290 discloses a process for producing a syngas. WO 2007/114250 discloses a liquid fuel synthesis system.

### OBJECTIVE

The objective is to disclose a new type method for producing carbon monoxide from carbon dioxide. Further, the objective is to disclose a new type method for treating carbon dioxide streams. Further, the objective is to improve a Fischer-Tropsch synthesis.

### SUMMARY

The method and use are characterized by what are presented in the claims.

### BRIEF DESCRIPTION OF THE DRAWINGS

The accompanying drawings, which are included to provide a further understanding of the invention and constitutes a part of this specification, illustrate some embodiments of the invention and together with the description help to explain the principles of the invention. In the drawings:
Fig. 1 is a flow chart illustration of a process , and
Fig. 2 is a flow chart illustration of a process according to an embodiment.

### DETAILED DESCRIPTION

In a method for producing carbon monoxide (CO), wherein the carbon monoxide is formed from a gaseous feed (1) which comprises at least carbon dioxide, wherein the method comprises supplying oxygen (2) to a carbon dioxide stream (3) for forming a carbon dioxide based mixture (4), supplying the carbon dioxide based mixture (4) to a hydrogen based stream (5) to form the gaseous feed (1), supplying a hydrocarbon containing stream (6) to the hydrogen based stream (5) before the supply of the carbon dioxide based mixture (4), feeding the gaseous feed into a reactor (7) which comprises at least one catalyst, treating the gaseous feed by means of a partial oxidation in the reactor (7) so that carbon dioxide reacts with hydrogen in the reactor in presence of oxygen and heat is formed during the reaction, and recovering a product composition (8) comprising at least carbon monoxide and hydrogen from the reactor (7). Carbon dioxide is converted to carbon monoxide during the reaction in the reactor (7).

An apparatus for producing carbon monoxide comprises feeding devices for supplying oxygen (2) to a carbon dioxide stream (3) for forming a carbon dioxide based mixture (4), for supplying the carbon dioxide based mixture (4) to a hydrogen based stream (5) to form the gaseous feed (1) and for supplying a hydrocarbon containing stream (6) to the hydrogen based stream (5) before the supply of the carbon dioxide based mixture (4) and for feeding the gaseous feed (1) into a reactor (7), at least one reactor (7) which comprises at least one catalyst and to which the gaseous feed (1) is supplied and in which the gaseous feed is treated by means of a partial oxidation so that carbon dioxide reacts with hydrogen in the reactor in presence of oxygen and heat is formed during the reaction, and at least one recovering device for recovering a product composition (8) comprising at least carbon monoxide and hydrogen from the reactor (7).

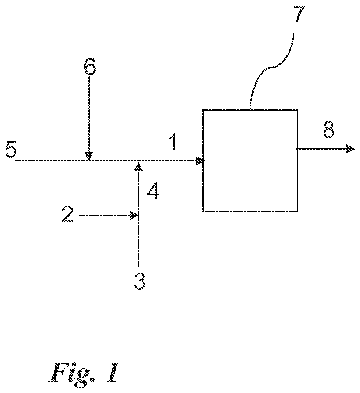

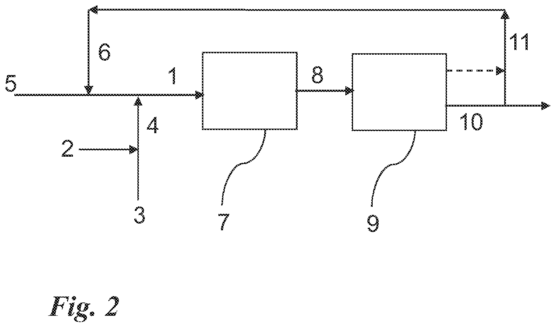

A method and an apparatus is shown in Fig 1. Another method and an apparatus is shown in Fig 2.

The feed of the reactor (7) is in gaseous form. The gaseous feed (1) comprises at least carbon dioxide, oxygen, hydrogen and hydrocarbons. The gaseous feed (1) may contain also other compounds. In this context, the gaseous feed (1) means any feed into the reactor (7) in which a partial oxidation is carried out and carbon dioxide is converted to carbon monoxide. The gaseous feed (1) is supplied to a catalyst bed of the reactor (7). In one embodiment, the gaseous feed is treated before the supply into the reactor.

In this context, the hydrocarbon containing stream (6) means any stream which comprises at least hydrocarbons. In one embodiment, the hydrocarbon containing stream (6) comprises light hydrocarbons, preferably C1-C6 hydrocarbons. In one embodiment, the hydrocarbon containing stream (6) comprises hydrocarbons which are C1-C30 hydrocarbons. In one embodiment, the hydrocarbon containing stream (6) comprises hydrocarbons and, further, hydrogen, carbon monoxide and/or carbon dioxide.

The gaseous feed (1) comprises carbon dioxide, i.e. carbon dioxide stream (3). In this context, the carbon dioxide stream (3) means any carbon dioxide stream or carbon dioxide based stream. In one embodiment, the carbon dioxide stream (3) contains at least carbon dioxide, and it may contain also a little amount of hydrocarbons.

The gaseous feed (1) comprises oxygen (2). In one embodiment, an amount of the oxygen (2) which is supplied to the carbon dioxide stream (3) is based on process conditions and/or a desired product distribution.

In this context, the hydrogen based stream (5) means any stream which comprises hydrogen. Preferably, the hydrogen based stream comprises mainly hydrogen, i.e. it mainly consists of hydrogen.

In one embodiment, the hydrocarbon containing stream (6) is mixed with the hydrogen based stream (5) and to this feed the carbon dioxide based mixture (4) is added for forming the gaseous feed (1). The whole gaseous feed (1) is fed to the reactor (7).

The gaseous feed (1) is fed with high velocity to the reactor (7), such as to a catalyst bed of the reactor (7), such that the velocity of the gaseous feed, i.e. gas stream, is ≥ 0.5 m/s. In one embodiment the velocity of the gas stream is about 1 m/s. In one embodiment the velocity of the gas stream is over 1 m/s. Then the hotpots are prevented in the reactor feed and in the reactor. Further, it is important to feed the oxygen together with carbon dioxide.

In one embodiment, the reactor (7) is a tube reactor or tubular reactor. The reactor is a partial oxidation reactor in which the partial oxidation is carried out. The reactor may be a catalytic partial oxidation (CPOX) reactor. Preferably, carbon dioxide is converted to carbon monoxide in the reactor. The reactor may be a CPOX reactor in which RWGS reaction (reverse water gas shift reaction) is also carried out. In one embodiment, hydrogen rich syngas is formed in the reactor, such as in the CPOX reactor. The reactor (7) may be surrounded by an insulating covering, preferably for maintaining heat in the reactor.

In one embodiment, the treatment temperature is 800 - 1500 °C in the reactor (7). In one embodiment, the treatment temperature is preferably over 800°C. In one embodiment, the treatment temperature is 800 - 1000 °C, and in one embodiment 800 - 950°C. Preferably, the heat is formed during the partial oxidation reaction in the reactor (7). In one embodiment, the reaction is started by heating, e.g. by means of an external heat device, in the reactor (7).

In one embodiment, pressure in the reactor (7) is 15 - 30 bar, and in one embodiment 17 - 25 bar. In one embodiment, the pressure is preferably about 20 bar.

In one embodiment, the catalyst comprises at least one catalyst agent on a carrier material, and the catalyst agent is selected from a metal of the noble metal group, e.g. Rh, and/or a transition metal group, e.g. Fe, Co, Ni. In one embodiment, the carrier material can be any suitable carrier material, e.g. Al₂O₃, or ZrO₂ based carrier material or other suitable carrier material which endures high temperatures. In one embodiment, the catalyst is Rh/Al₂O₃ catalyst. In one embodiment, the catalyst is NiRh/Al₂O₃ catalyst. In one embodiment, the catalyst is Ni/Al₂O₃ catalyst. In one embodiment, the catalyst is selected from Rh/Al₂O₃ catalyst, NiRh/Al₂O₃ catalyst and Ni/Al₂O₃ catalyst. Alternatively other suitable catalyst can be used. In one embodiment, the catalyst is arranged as a coating on a substrate, e.g. as a washcoating, onto a metal surface, such as metal monolith, or ceramic surface, such as ceramic monolith.

The partial oxidation is carried out in the reactor (7). Preferably, the partial oxidation is an exothermic reaction. Carbon monoxide is formed from carbon dioxide in the reactor (7) . In one embodiment, also a reverse water gas shift (RWGS) reaction is carried out in the reactor in order to convert carbon dioxide to carbon monoxide. The reverse water gas shift (RWGS) reaction is an endothermic reaction. Preferably, the partial oxidation reaction brings the necessary heat for the reaction in which carbon dioxide is converted to carbon monoxide. Preferably, the invention is based on the combination of the partial oxidation reaction and the reaction for converting carbon dioxide to carbon monoxide. In one embodiment, the invention is based on a combined CPOX and RWGS reactor.

In this context, the product composition (8) means any product from the reactor (7). The product composition comprises one or more product components, e.g. carbon monoxide, hydrogen, water and/or other components. The product composition contains at least carbon monoxide and hydrogen. In one embodiment, the product composition contains also water. The product composition may contain also other components. In one embodiment, the product composition mainly consists of carbon monoxide and hydrogen. In one embodiment, the product composition can be post-treated after the reactor (7). The product composition is supplied to a desired treatment process, to a Fischer-Tropsch process. The product composition is a syngas which can be supplied to the Fischer-Tropsch (FT) process. In one embodiment, water may be removed from the product composition after the reactor (7).

In one embodiment, the product distribution of the product composition (8) is adjusted by means of the components in the gaseous feed (1) and amounts of said components. In one embodiment, the product distribution is adjusted based on a synthesis after the reactor (7), for example for adjusting suitable feed to the synthesis or for adjusting H₂/CO ratio.

In one embodiment, the product composition (8) is cooled after the reactor (7). In one embodiment, the product composition (8) is cooled to temperature of 4 - 300°C, and in one embodiment to about 250 °C. In one embodiment, water of the product composition (8) may be condensed in a condenser.

In one embodiment, the product composition (8) is used as a feed to a synthesis process, or a methanation, or a production of methanol, or to another suitable process.

An apparatus comprises at least one Fischer-Tropsch reactor (9), i.e. FT reactor (9), into which the product composition (8) is supplied. Any suitable Fischer-Tropsch (FT) reactor known per se can be used as the Fischer-Tropsch reactor in the apparatus.

The product composition (8) is supplied as the feed to a Fischer-Tropsch step, such as to a Fischer-Tropsch reactor (9). Carbon monoxide and hydrogen are supplied from the reactor (7) to the Fischer-Tropsch reactor (9). In one embodiment, the product composition (8) can be treated before the supply to the Fischer-Tropsch reactor (9).

Preferably, the Fischer-Tropsch (FT) reaction is an exothermic reaction in which carbon monoxide reacts with hydrogen. In one embodiment, paraffin-rich hydrocarbons which can be considered as heavy hydrocarbons are formed from the carbon monoxide and hydrogen in the Fischer-Tropsch (FT) reaction. In one embodiment, the Fischer-Tropsch reaction is carried out by means of Co-based catalyst or Fe-based catalyst in the Fischer-Tropsch (FT) reactor (9). Alternatively, the FT reaction can be made with other suitable catalyst.

In one embodiment, the Fischer-Tropsch reaction is carried out at temperature which is 150 - 350 °C, in one embodiment 200 - 300°C. In one embodiment, pressure is 15 - 25 bar, in one embodiment about 20 bar, during the FT reaction. In one embodiment, the Fischer-Tropsch reaction takes place at around 20 bar pressure and around 200 - 300°C.

In one embodiment, the product (10) of the Fischer-Tropsch (FT) step is a mixture of hydrocarbons. In one embodiment, the product of the FT comprises at least hydrocarbons, e.g. C5 - C60 hydrocarbons. In one embodiment, the product of the FT comprises desired components, such as oil and wax components, and undesired components, such as water, light hydrocarbons, unreacted feed components and/or non-condensable components or their combinations. In one embodiment, the non-condensable components are discharged as an off-gas stream (11) from the FT step, e.g. from the FT reactor. In one embodiment, the product of the FT comprises also other organic compounds.

In one embodiment, H₂/CO ratio in the FT reaction can be adjusted by means of an amount of hydrogen feed to the FT reactor and/or by means of the components and the amount of the components in the gaseous feed to the partial oxidation reactor.

The off-gas stream (11) comprising at least hydrocarbons from the FT step or FT reactor (9) is recycled and is used as the hydrocarbon containing stream (6) in the feed of the partial oxidation reactor (7). In this context, the off-gas stream means any off-gas or tail gas or other undesired gas from the FT step or FT reactor. Preferably the off-gas stream comprises undesired components, such as light hydrocarbons, unreacted feed components, non-condensable components or their combinations, of the FT process product. Further, the off-gas stream can comprise water. In one embodiment, the off-gas stream comprises light hydrocarbons, preferably C1-C6 hydrocarbons. In one embodiment, the off-gas stream comprises hydrocarbons and, further, hydrogen, carbon monoxide and/or carbon dioxide.

An apparatus comprises at least one recirculation device for recycling the off-gas stream (11) comprising at least hydrocarbons from the Fischer-Tropsch step and for using the off-gas stream as the hydrocarbon containing stream (6).

The off-gas stream (11) of the FT reactor (9) is recycled and is used as the hydrocarbon containing stream (6) in the feed of the partial oxidation reactor (7), such as catalytic partial oxidation reactor (CPOX), and the product composition (8) from the partial oxidation reactor (7) is supplied to the FT reactor (9). Then the off-gases of the FT reactor can be recirculated to the partial oxidation reactor in which the off-gases can be processed to syngas, such as carbon monoxide. In one embodiment, the partial oxidation reactor (7), such CPOX reactor, is operated at the same pressure as the FT reactor (9) wherein the off-gas recirculation can be utilized better.

In one embodiment, the method comprises more than one partial oxidation steps. An apparatus comprises more than one partial oxidation reactors (7). In one embodiment, the method comprises one partial oxidation step. An apparatus comprises one partial oxidation reactor (7).

At least two reactors (7) may be arranged in parallel. At least two reactors (7) may be arranged sequentially.

In one embodiment, the method comprises more than one Fischer-Tropsch process steps. The apparatus may comprise more than one FT reactors (9). In one embodiment, the method comprises one Fischer-Tropsch process step. The apparatus comprises one FT reactor (9). At least two reactors (9) may be arranged in parallel. At least two reactors (9) may be arranged sequentially.

The apparatus may comprise at least one outlet for discharging the product composition (8) out from the reactor (7).

The apparatus may comprise at least one feed inlet for supplying the gaseous feed (1) into the reactor (7).

The apparatus may comprise at least one outlet of the FT reactor for discharging the product (10) of the FT reactor (9) out from the FT reactor (9).

The apparatus may comprise at least one feed inlet of the FT reactor for supplying the product composition (8) of the reactor (7) into the FT reactor (9).

The feed inlet may be any suitable inlet known per se, e.g. pipe, port or the like. The product outlet may be any suitable outlet known per se, e.g. pipe, outlet port or the like.

Preferably, the apparatus comprises at least one feeding device. In this context, the feeding device can be any feeding device, equipment or other suitable device. The feeding device is selected from the group comprising pump, compressor, tube, pipe, other suitable feeding device and their combinations.

In one embodiment, the method is based on a continuous process. The apparatus may be a continuous apparatus. In one embodiment, the method is based on a batch process. The apparatus may be a batch apparatus.

In one embodiment, the method is used and utilized in a production of hydrocarbons, Fischer-Tropsch (FT) process, treatment of carbon dioxide, carbon dioxide capture process, catalytic partial oxidation (CPOX) process, methanation process, production of methanol, or their combinations.

Thanks to the invention carbon dioxide based feed can be treated and converted easily and effectively. The partial oxidation also brings the necessary heat for the reaction in which carbon dioxide is converted to carbon monoxide. When the oxygen is fed to carbon dioxide stream, the reaction of the oxygen and the burning can be prevented such that the reactions do not take place too quickly. Then it can be ensured that the reactions take place with the catalyst in the reactor, not before the catalyst. It is desirable that the oxygen does not react until in connection with the catalyst in the reactor. By means of the invention carbon dioxide can be used as a feed for a FT process. Further, non-condensable products, such as off-gases, of the FT process can be utilized and recirculated to the partial oxidation process. By means of said recirculation the yield of oils and waxes can be improved in the FT process. Further, the invention helps controlling the carbon or coke formation_by using oxygen to partially oxidate the hydrocarbons.

The method offers a possibility to treat carbon dioxide and carbon monoxide easily, and energy- and cost-effectively. The present invention provides an industrially applicable, simple and affordable way to produce carbon monoxide, and further to produce desired hydrocarbons by means of the FT reaction. The method is easy and simple to realize in connection with production processes.

### EXAMPLES

### Example 1 (not according with the invenion)

Figure 1 presents the method and also the apparatus for producing carbon monoxide (CO) from carbon dioxide (CO₂).

The carbon monoxide is formed from a gaseous feed (1) which comprises at least carbon dioxide. Oxygen (2) is supplied to a carbon dioxide stream (3) for forming a carbon dioxide based mixture (4). The carbon dioxide based mixture (4) is supplied to a hydrogen based stream (5) to form the gaseous feed (1). A hydrocarbon containing stream (6) is supplied to the hydrogen based stream (5) before the supply of the carbon dioxide based mixture (4) to the hydrogen based stream. The gaseous feed (1) is fed into a reactor (7) which comprises at least one catalyst. The gaseous feed is treated by means of a partial oxidation reaction in the reactor (7) with the catalyst so that carbon dioxide reacts with hydrogen in the reactor in presence of oxygen and heat is formed during the reaction. Simultaneously carbon dioxide is converted to carbon monoxide in the reactor. Product composition (8) comprising at least carbon monoxide and hydrogen is discharged from the reactor (7) and is recovered.

### Example 2 (according with the invention)

Figure 2 presents the method and also an apparatus for producing carbon monoxide (CO) from carbon dioxide (CO₂) and hydrocarbons from the carbon monoxide.

The carbon monoxide is formed from a gaseous feed (1) which comprises at least carbon dioxide. Oxygen (2) is supplied to a carbon dioxide stream (3) for forming a carbon dioxide based mixture (4). The carbon dioxide based mixture (4) is supplied to a hydrogen based stream (5) to form the gaseous feed (1). A hydrocarbon containing stream (6) is supplied to the hydrogen based stream (5) before the supply of the carbon dioxide based mixture (4). The gaseous feed (1) is fed into a partial oxidation reactor (7), such as catalytic partial oxidation reactor (CPOX), which comprises at least one catalyst which may be Rh/Al₂O₃ catalyst or other suitable catalyst. Preferably, the Rh/Al₂O₃ has been washcoated on metal monolith. The gaseous feed (1) is fed with high velocity to the catalyst bed of the reactor (7) such that the velocity of the gas stream is about 1 m/s or over 1 m/s. The reactor (7) is a tubular reactor which is surrounded by an insulating covering. The gaseous feed is treated by means of a partial oxidation reaction in the reactor (7) with the catalyst so that carbon dioxide reacts with hydrogen in the reactor in presence of oxygen and heat is formed during the reaction. Simultaneously carbon dioxide is converted to carbon monoxide in the reactor. Temperature is preferably 800 - 950 °C and pressure is about 20 bar in the reactor (7). Product composition (8) comprising at least carbon monoxide and hydrogen is discharged from the reactor (7) and is recovered.

The product composition (8) is supplied as the feed to a Fischer-Tropsch (FT) reactor (9). The product composition may be cooled and water may be removed from the product composition before the FT reactor, e.g. by a condenser at pressure of about 20 bar. The temperature is 200 - 300 °C after the cooling. The Fischer-Tropsch (FT) reaction is an exothermic reaction in which carbon monoxide reacts with hydrogen and paraffin-rich hydrocarbons can be formed. Temperature is preferably 200 - 300 °C and pressure is about 20 bar in the FT reactor (9).

A product (10) of the FT reactor (9) is a mixture of hydrocarbons comprising C5 - C60 hydrocarbons. The product of FT comprises desired components, such as oil and wax components, and undesired components, such as light hydrocarbons, unreacted feed components and/or non-condensable components or their combinations. An off-gas stream (11) comprising undesired components from the FT reactor (9) is recycled and is used as the hydrocarbon containing stream (6) in the feed of the partial oxidation reactor (7). The off-gas stream (11) comprises at least hydrocarbons, and it may comprise at least light hydrocarbons, preferably C1-C6 hydrocarbons.

The pressure in the partial oxidation reactor (7) is same than the pressure in the FT reactor (9). Then the off-gases of the FT reactor can be recirculated to the partial oxidation reactor in which the off-gases can be processed to carbon monoxide.

### Example 3 (not according with the invention)

The RWGS was studied in a pilot scale process with 37 l/min. A reactor of the pilot scale process corresponded to the reactor (7) of Fig. 1. The gaseous feed was supplied to the reactor. The equilibrium composition was achieved at temperature range 800 to 850 °C with linear flow velocity of 1 m/s using Rh/Al₂O₃ catalyst. The results are presented in Table 1.

**Table 1**

| | | |
|---|---|---|
| Vₜₒₜ (in) | 36.5 | ln/min |
| Vₜₒₜ (out) | 25.1 | ln/min |
| p | 8.2 | bar |
| T_{cat} | 822 | °C |
| | | |

| | Inlet vol-% | Outlet vol-% |
|---|---|---|
| H2 | 65.3 | 62.7 |
| N2 | 5.0 | 7.3 |
| CO | 0.0 | 20.3 |
| CO2 | 21.5 | 8.2 |
| CH4 | 3.0 | 1.5 |
| O2 | 5.1 | 0.0 |
| Total | 100.0 | 100.0 |

The devices and equipments of the process used in these examples are known per se in the art, and therefore they are not described in any more detail in this context.

The method and apparatus are suitable in different embodiments for treating carbon dioxide and for forming carbon monoxide from different kinds of feeds.

The invention is not limited merely to the examples referred to above; instead many variations are possible within the scope defined by the claims.

## Claims

1. A method for producing carbon monoxide, wherein the carbon monoxide is formed from a gaseous feed (1) which comprises at least carbon dioxide, **characterized in that** the method comprises the steps
- supplying oxygen (2) to a carbon dioxide stream (3) for forming a carbon dioxide based mixture (4),
- providing a hydrogen based stream (5) comprised mainly of hydrogen,
- supplying a hydrocarbon containing stream (6) to the hydrogen based stream (5),
- supplying the carbon dioxide based mixture (4) to the hydrogen based stream (5) to form the gaseous feed (1), and supplying the hydrocarbon containing stream (6) to the hydrogen based stream (5) before the supply of the carbon dioxide based mixture (4),
- feeding the gaseous feed (1) into a reactor (7) which comprises at least one catalyst, and feeding the gaseous feed with velocity of the gas stream which is ≥ 0.5 m/s to the reactor,
- treating the gaseous feed (1) by means of a partial oxidation in the reactor (7) so that carbon dioxide reacts with hydrogen in the reactor in presence of oxygen to form heat and carbon monoxide during the reaction,
- recovering a product composition (8) comprising at least carbon monoxide and hydrogen from the reactor (7), and supplying the product composition (8) to a Fischer-Tropsch step,
- recycling an off-gas stream (11) comprising at least hydrocarbons from the Fischer-Tropsch step to be used as the hydrocarbon containing stream (6), and
- the pressure in the partial oxidation reactor (7) is same as the pressure in a Fischer-Tropsch reactor of the Fischer-Tropsch step.

2. The method according to claim 1, **characterized in that** a treatment temperature is 800 - 1500 °C in the reactor (7).

3. The method according to claim 1 or 2, c h a r a c t e r i z e d in that a treatment temperature is 800 - 950 °C in the reactor (7).

4. The method according to any one of claims 1 to 3, **characterized in** a pressure is 15 - 30 bar in the reactor (7).

5. The method according to any one of claims 1 to 4, **characterized in that** the catalyst is selected from Rh/Al₂O₃ catalyst, NiRh/Al₂O₃ catalyst and Ni/Al₂O₃ catalyst.

6. The method according to any one of claims 1 to 5, **characterized in that** the product composition (8) is cooled after the reactor (7).

7. The method according to any one of claims 1 to 6, **characterized in that** the Fischer-Tropsch reaction is carried out at temperature which is 150 - 350 °C.

8. The method according to any one of claims 1 to 7, **characterized in that** pressure is 15 - 25 bar during the Fischer-Tropsch reaction.

9. A use of the method according to any one of claims 1 to 8, **characterized in that** the method is used in a production of hydrocarbons, treatment of carbon dioxide, carbon dioxide capture process, catalytic partial oxidation process, methanation process, production of methanol, or their combinations.

## Patentansprüche

1. Verfahren zur Herstellung von Kohlenmonoxid, wobei das Kohlenmonoxid aus einem gasförmigen Einsatzmaterial (1) gebildet wird, das mindestens Kohlendioxid umfasst, **dadurch gekennzeichnet, dass** das Verfahren die folgenden Schritte umfasst
- Zuführen von Sauerstoff (2) zu einem Kohlendioxidstrom (3) zur Bildung eines Gemischs auf Kohlendioxidbasis (4),
- Bereitstellen eines Stroms auf Wasserstoffbasis (5), der hauptsächlich aus Wasserstoff besteht,
- Zuführen eines Kohlenwasserstoffs enthaltenden Stroms (6) zu dem Strom auf Wasserstoffbasis (5),
- Zuführen des Gemischs auf Kohlendioxidbasis (4) zum Strom auf Wasserstoffbasis (5), um das gasförmige Einsatzmaterial (1) zu bilden, und Zuführen des Kohlenwasserstoff enthaltenden Stroms (6) zum Strom auf Wasserstoffbasis (5) vor der Zufuhr des Gemischs auf Kohlendioxidbasis (4),
- Einspeisen des gasförmigen Einsatzmaterials (1) in einen Reaktor (7), der mindestens einen Katalysator umfasst, und Einspeisen des gasförmigen Einsatzmaterials mit einer Gasstromgeschwindigkeit von ≥ 0,5 m/s in den Reaktor,
- Behandeln des gasförmigen Einsatzmaterials (1) durch eine partielle Oxidation im Reaktor (7), so dass Kohlendioxid mit Wasserstoff im Reaktor in Gegenwart von Sauerstoff reagiert, um während der Reaktion Wärme und Kohlenmonoxid zu bilden,
- Gewinnen einer Produktzusammensetzung (8), die mindestens Kohlenmonoxid und Wasserstoff umfasst, aus dem Reaktor (7) und Zuführen der Produktzusammensetzung (8) zu einem Fischer-Tropsch-Schritt,
- Recyceln eines Abgasstroms (11), umfassend mindestens Kohlenwasserstoffe aus dem Fischer-Tropsch-Schritt, die als der Kohlenwasserstoff enthaltende Strom (6) verwendet werden sollen, und
- wobei der Druck im Teiloxidationsreaktor (7) dem Druck in einem Fischer-Tropsch-Reaktor des Fischer-Tropsch-Schritts entspricht.

2. Verfahren nach Anspruch 1, **dadurch gekennzeichnet, dass** die Behandlungstemperatur im Reaktor (7) 800 - 1500 °C beträgt.

3. Verfahren nach Anspruch 1 oder 2, **dadurch gekennzeichnet, dass** die Behandlungstemperatur im Reaktor (7) 800 - 950 °C beträgt.

4. Verfahren nach einem der Ansprüche 1 bis 3, **dadurch gekennzeichnet, dass** der Druck im Reaktor (7) beträgt 15 - 30 bar beträgt.

5. Verfahren nach einem der Ansprüche 1 bis 4, **dadurch gekennzeichnet, dass** der Katalysator aus Rh/Al₂O₃-Katalysator, NiRh/Al₂O₃-Katalysator und Ni/Al₂O₃-Katalysator ausgewählt ist.

6. Verfahren nach einem der Ansprüche 1 bis 5, **dadurch gekennzeichnet, dass** die Produktzusammensetzung (8) nach dem Reaktor (7) gekühlt wird.

7. Verfahren nach einem der Ansprüche 1 bis 6, **dadurch gekennzeichnet, dass** die Fischer-Tropsch-Reaktion bei einer Temperatur von 150 - 350 °C durchgeführt wird.

8. Verfahren nach einem der Ansprüche 1 bis 7, **dadurch gekennzeichnet, dass** der Druck während der Fischer-Tropsch-Reaktion bei 15 - 25 bar liegt.

9. Verfahren nach einem der Ansprüche 1 bis 8, **dadurch gekennzeichnet, dass** das Verfahren bei der Herstellung von Kohlenwasserstoffen, der Behandlung von Kohlendioxid, dem Prozess zur Kohlendioxidabscheidung, dem Prozess zur katalytischen Teiloxidation, dem Prozess zur Methanisierung, der Herstellung von Methanol oder deren Kombinationen verwendet wird.

## Revendications

1. Procédé de production de monoxyde de carbone, dans lequel le monoxyde de carbone est formé à partir d'une charge gazeuse (1) qui comprend au moins du dioxyde de carbone, **caractérisé en ce que** le procédé comprend les étapes
- apport d'oxygène (2) à un flux (3) de dioxyde de carbone pour former un mélange (4) à base de dioxyde de carbone,
- fourniture d'un courant (5) à base d'hydrogène principalement composé d'hydrogène,
- apport d'un flux (6) contenant des hydrocarbures au flux (5) à base d'hydrogène,
- apport du mélange (4) à base de dioxyde de carbone au flux (5) à base d'hydrogène pour former la charge gazeuse (1), et apport du flux (6) contenant des hydrocarbures au flux (5) à base d'hydrogène avant l'apport du mélange (4) à base de dioxyde de carbone,
- introduction de la charge gazeuse (1) dans un réacteur (7) qui comprend au moins un catalyseur et introduction de la charge gazeuse avec une vitesse du flux gazeux qui est ≥ 0,5 m/s dans le réacteur,
- traitement de la charge gazeuse (1) au moyen d'une oxydation partielle dans le réacteur (7) de sorte que le dioxyde de carbone réagit avec l'hydrogène dans le réacteur en présence d'oxygène pour former de la chaleur et du monoxyde de carbone pendant la réaction,
- récupération d'une composition (8) de produit comprenant au moins du monoxyde de carbone et de l'hydrogène à partir du réacteur (7), et apport de la composition (8) de produit dans une étape de Fischer-Tropsch,
- recyclage d'un flux (11) de gaz de dégagement comprenant au moins des hydrocarbures à partir de l'étape de Fischer-Tropsch devant être utilisé en tant que flux (6) contenant des hydrocarbures, et
- la pression dans le réacteur (7) d'oxydation partielle est la même que la pression dans un réacteur de Fischer-Tropsch de l'étape de Fischer-Tropsch.

2. Procédé selon la revendication 1, **caractérisé en ce qu'**une température de traitement est de 800 à 1 500 °C dans le réacteur (7).

3. Procédé selon la revendication 1 ou la revendication 2, **caractérisé en ce qu'**une température de traitement est de 800 à 950 °C dans le réacteur (7).

4. Procédé selon l'une quelconque des revendications 1 à 3, **caractérisé en ce qu'**une pression est de 15 à 30 bar dans le réacteur (7).

5. Procédé selon l'une quelconque des revendications 1 à 4, **caractérisé en ce que** le catalyseur est sélectionné parmi un catalyseur de Rh/Al₂O₃, un catalyseur de NiRh/Al₂O₃ et un catalyseur de Ni/Al₂O₃.

6. Procédé selon l'une quelconque des revendications 1 à 5, **caractérisé en ce que** la composition (8) de produit est refroidie après le réacteur (7).

7. Procédé selon l'une quelconque des revendications 1 à 6, **caractérisé en ce que** la réaction de Fischer-Tropsch est mise en oeuvre à une température qui est de 150 à 350 °C.

8. Procédé selon l'une quelconque des revendications 1 à 7, **caractérisé en ce que** la pression est de 15 à 25 bar pendant la réaction de Fischer-Tropsch.

9. Utilisation du procédé selon l'une quelconque des revendications 1 à 8, **caractérisé en ce que** le procédé est utilisé dans une production d'hydrocarbures, un traitement de dioxyde de carbone, un procédé de capture de dioxyde de carbone, un procédé d'oxydation partielle catalytique, un procédé de méthanation, une production de méthanol, ou leurs combinaisons.
